# EUROPÄISCHE PATENTANMELDUNG

(11) **EP 2 533 432 A2**
(43) Veröffentlichungstag der Anmeldung: **12.12.2012**
(21) Anmeldenummer: 12003770.0
(22) Anmeldetag: 12.05.2012
(51) Int. Cl.: H04B 7/155

(54) **WLAN-Repeater**

(30) Priorität: 07.06.2011 DE 102011103440; 13.04.2012 DE 102012007429
(71) Anmelder: ABB AG, 68309 Mannheim (DE)
(72) Erfinder: Diehl, Sven, 57078 Siegen (DE); Mrkajic, Oliver, 58511 Lüdenscheid (DE)

(57) **Zusammenfassung**

Es wird ein WLAN-Repeater (1) in Form eines Unterputz-Elektro-Installationsgerätes mit UP-Gerätesockel (2), Zentralscheibe (9) und Abdeckrahmen (23) vorgeschlagen,
● wobei eine Zentralscheiben-Abdeckhaube (10) der Zentralscheibe (9) ein Anzeigefenster (12) für eine WLAN-Status-Anzeige, ein Anzeigefenster (13) für eine Inbetriebnahme-Anzeige und einen WPS-Button (14) zur Einleitung eines Wi-Fi-Protected-Setup aufweist,
● wobei eine WLAN-Antenne (19) in der Zentralscheibe (9) angeordnet ist und
● wobei im UP-Gerätesockel (2) ein Netzteil (5) mit einem Anschluss (6) für ein externes 230V-Wechselspannungsnetz und eine WLAN-Repeater-Elektronik (7) vorgesehen sind.

## Beschreibung

Die Erfindung betrifft einen WLAN-Repeater.

Damit eine Wohnung oder ein Eigenheim in ausreichender Qualität mit einem WLAN-Netzwerk respektive Heimnetzwerk versorgt werden kann, ist oftmals ein WLAN-Repeater erforderlich, der als zusätzliches Gerät im Haus aufgestellt werden muss, um damit die Reichweite eines Wireless-Access-Points zu erweitern, d. h. in WLAN-Netzen werden WLAN-Repeater meist dazu verwendet, um die Reichweite eines drahtlosen Funknetzes eines Heimnetzwerkes zu erweitern.

Der Erfindung liegt die Aufgabe zugrunde, einen WLAN-Repeater anzugeben, welcher sich in eine Wohnung / in ein Haus integrieren lässt, ohne dabei störend zu wirken.

Diese Aufgabe wird erfindungsgemäß gelöst durch einen WLAN-Repeater in Form eines Unterputz-Elektro-Installationsgerätes mit UP-Gerätesockel, Zentralscheibe und Abdeckrahmen,
● wobei eine Zentralscheiben-Abdeckhaube der Zentralscheibe ein Anzeigefenster für eine WLAN-Status-Anzeige, ein Anzeigefenster für eine Inbetriebnahme-Anzeige und einen WPS-Button zur Einleitung eines Wi-Fi-Protected-Setup aufweist,
● wobei eine WLAN-Antenne in der Zentralscheibe angeordnet ist und
● wobei im UP-Gerätesockel ein Netzteil mit einem Anschluss für ein externes 230V-Wechselspannungsnetz und eine WLAN-Repeater-Elektronik vorgesehen sind.

Die mit der Erfindung erzielbaren Vorteile bestehen insbesondere darin, dass eine formschöne Integration eines WLAN-Repeaters in ein Installationsprogramm ermöglicht wird. Der WLAN-Repeater kann beispielsweise in Mehrfach-Kombination (z. B. 2fach-Kombination, 3fach-Kombination, 4fach-Kombination) zusammen mit Schaltern, Dimmern, Steckdosen usw. eingesetzt werden. Derartige Installationsgeräte-Programme sind in vielfältiger Art mit unterschiedlichem Design, unterschiedlicher Farbgebung und unter Einsatz unterschiedlicher Materialien (z. B. Kunststoff, Edelstahl) verfügbar. Auf die vorgeschlagene Weise wird der WLAN-Repeater harmonisch in ein Unterputz-Programm integriert und stellt keinen "Fremdkörper" im Hinblick auf Steckdosen, Schalter, Dimmer, Tastsensoren, EIB/KONNEX-Geräte der Hauskommunikation, Bewegungsmelder usw. dar.

Allgemein werden durch den vorgeschlagenen WLAN-Repeater existierende WLAN-Netze respektive Heimnetzwerke ertüchtigt,
● um Multimediageräte z. B. in die Lage zu versetzen, WLAN-Netzwerkverbindungen aufzubauen,
● um es Fernsehgeräten z. B. zu ermöglichen, auf Online-Inhalte zuzugreifen,
● um elektronische Bilderrahmen z. B. zu befähigen, auf in einem Heimnetz gespeicherte Bilder und Videos zuzugreifen,
● um Gelegenheit für handelsübliche Notebooks zu bieten, von relativ weit voneinander entfernten unterschiedlichen Orten im Haus auf das Internet zuzugreifen

In weiterer Ausgestaltung der Erfindung können die WLAN-Status-Anzeige und/oder die Inbetriebnahme-Anzeige in Form von einer/zwei mehrfarbigen LED(s) ausgebildet sein. Die Mehrfarbigkeit einer LED erlaubt es dabei, unterschiedliche Stati mit einer einzigen LED darzustellen.

Zweckmäßig ist der WPS-Button in Form eines Mikrotasters ausgebildet, wodurch die Voraussetzung für ein sicheres, präzises und hinsichtlich der Lebensdauer über eine lange Zeitspanne gesichertes Setup des Heimnetzwerkes geschaffen wird.

Vorteilhaft sind die WLAN-Antenne, die LED(s) und der Mikrotaster auf einer Leiterplatte montiert, was die Herstellung sowie die Montage vereinfacht und kostengünstig ermöglicht.

Wie allgemein bei elektronischen Geräten der Gebäude-Installationstechnik üblich sind der UP-Gerätesockel und die Zentralscheibe über einander korrespondierend ausgebildete elektrische Steckvorrichtungen lösbar miteinander verbunden.

Zweckmäßig weist der UP-Gerätesockel einen Tragring mit Rastöffnungen auf, in welche Rastzungen der Zentralscheibe arretierend eingreifen, um auf diese Weise sowohl eine stabile Verbindung im zusammengesetzten Zustand zu gewährleisten als auch die Möglichkeit eines Trennens dieser beiden Baukomponenten zu erlauben.

In weiterer Ausgestaltung ist zusätzlich eine SD-Kartenleser-Schnittstelle von der Zentralscheibe aus zugänglich und mit der WLAN-Repeater-Elektronik verbunden.

In weiterer Ausgestaltung ist zusätzlich eine USB-Schnittstelle von der Zentralscheibe aus zugänglich und mit der WLAN-Repeater-Elektronik verbunden.

Die Erfindung wird nachstehend an Hand der in der Zeichnung dargestellten Ausführungsbeispiele näher erläutert. Es zeigen:
- Fig. 1: eine perspektivische Sicht auf einen WLAN-Repeater (ohne Abdeckrahmen) bei geöffneter Zentralscheibe in "Explosionsdarstellung",
- Fig. 2: eine perspektivische Sicht auf einen WLAN-Repeater in "Explosionsdarstellung",
- Fig. 3: eine perspektivische Sicht auf einen WLAN-Repeater (ohne Abdeckrahmen),
- Fig. 4: eine Sicht auf die Frontseite eines WLAN-Repeaters,
- Fig. 5: eine Sicht auf eine geöffnete Zentralscheibe,
- Fig. 6: eine Seitenansicht eines WLAN-Repeaters (ohne Abdeckrahmen),
- Fig. 7: eine perspektivische Sicht auf einen UP-Gerätesockel und eine abgenommene Zentralscheibe,
- Fig. 8: eine Seitenansicht auf einen UP-Gerätesockel und eine abgenommene Zentralscheibe,
- Fig. 9: eine elektrische Schaltskizze des WLAN-Repeaters,
- Fig. 10: eine Sicht auf die Frontseite eines alternativen WLAN-Repeaters,
- Fig. 11: eine elektrische Schaltskizze des alternativen WLAN-Repeaters.

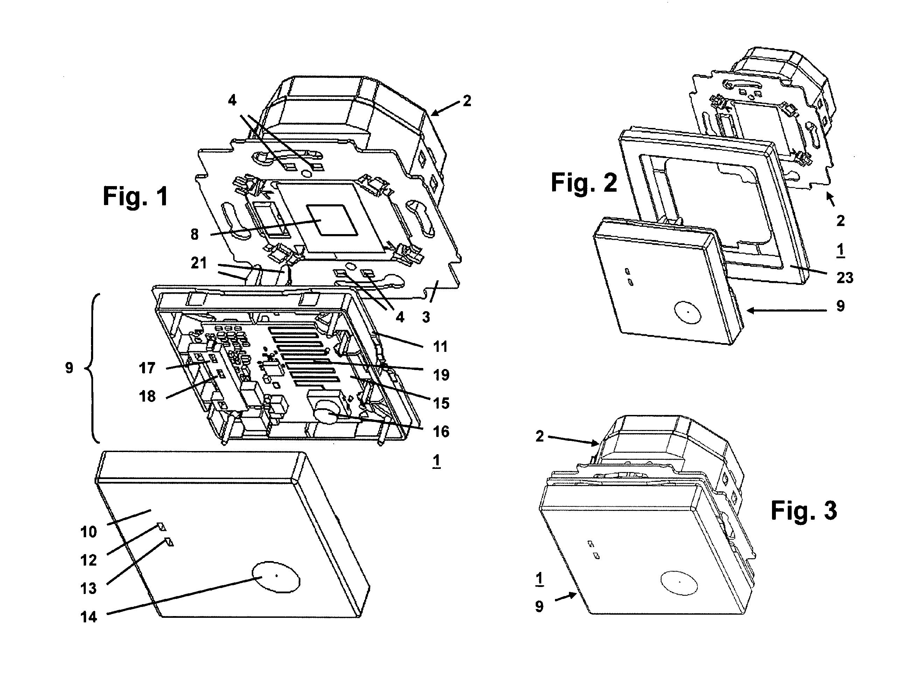

In Fig. 1 ist eine perspektivische Sicht auf einen WLAN-Repeater (ohne Abdeckrahmen) bei geöffneter Zentralscheibe in "Explosionsdarstellung" dargestellt. Der WLAN-Repeater 1 besitzt einen für den Einbau in eine handelsübliche (normgerechte) UP-Gerätedose geeigneten UP-Gerätesockel 2 (Unterputz), welcher einen Tragring 3 aufweist, der mit mehreren für die mechanische Montage einer Zentralscheibe 9 dienenden Rastöffnungen 4 versehen ist. An seiner Frontseite besitzt der UP-Gerätesockel 2 eine elektrische Steckvorrichtung 8 für die elektrische Verbindung mit der Zentralscheibe 9.

Die Zentralscheibe 9 ist aus einer Zentralscheiben-Abdeckhaube 10 und einem Zentralscheiben-Unterteil 11 zusammensetzbar. Die Zentralscheiben-Abdeckhaube 10 weist auf:
● ein Anzeigefenster 12 für eine WLAN-Status-Anzeige,
● ein Anzeigefenster 13 für eine Inbetriebnahme-Anzeige (Connectivity),
● einen WPS-Button 14 (Drucktaste) zur Einleitung eines "Wi-Fi-Protected Setup" (ein von der Wi-Fi-Alliance entwickelter Standard zum einfachen und sicheren Aufbau eines drahtlosen Heimnetzwerks). Wird der WPS-Button 14 gedrückt, beginnt eine zweiminütige Phase, während welcher Geräte dem Netzwerk beitreten können. Hierdurch wird das Hinzufügen von Geräten in ein bestehendes Netzwerk vereinfacht. Durch die Möglichkeit, mittels WPS eine sichere Netzverbindung zu erstellen, reicht ein einzelner WPS-Button 14, um im Heimnetzwerk auf die üblichen Sicherheitsprotokolle Wi-Fi-Protected-Access WPA und Wi-Fi-Protected-Access-2 WPA2 zuzugreifen.

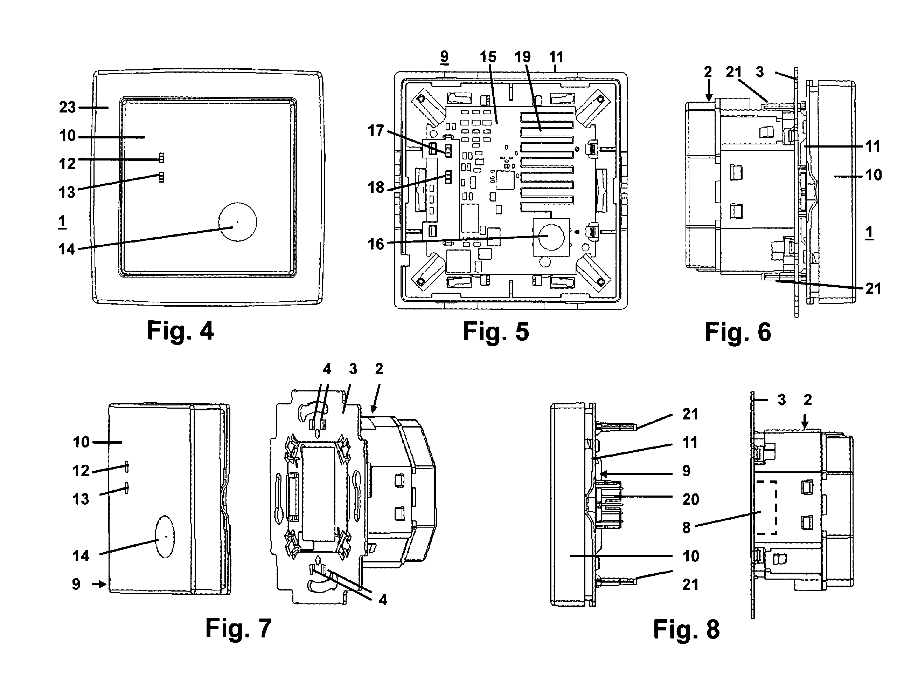

Die Zentralscheibe 9 umfasst eine am Zentralscheiben-Unterteil 11 montierte Leiterplatte 15, auf welcher neben weiteren elektrischen/elektronischen Baukomponenten
● ein dem WPS-Button 14 zugeordneter Mikrotaster 16,
● eine dem Anzeigefenster 12 für eine WLAN-Status-Anzeige zugeordnete mehrfarbige LED 17,
● eine dem Anzeigefenster 13 für eine Inbetriebnahme-Anzeige zugeordnete mehrfarbige LED 18,
● eine WLAN-Antenne 19,
● eine zur elektrischen Steckverbindung 6 korrespondierende elektrische Steckvorrichtung 20 - siehe hierzu Figur 8 -
befestigt sind. Am Zentralscheiben-Unterteil 11 sind mehrere Rastzungen 21 vorhanden/montiert, welche für den Eingriff in die Rastöffnungen 4 des UP-Gerätesockels 2 geeignet sind, um hierdurch eine sichere Arretierung der Zentralscheibe 9 am UP-Gerätesockel 2 sicherzustellen. Durch Mehrfarbigkeit der LEDs 17, 18 können unterschiedliche Stati mit jeweils einer LED dargestellt werden, wie z. B.
- LED 17 leuchtet grün:: "korrekter WLAN-Status"
- LED 17 leuchtet rot:: "WLAN gestört"
- LED 18 leuchtet grün:: "korrekte Inbetriebnahme erfolgt"
- LED18 leuchtet rot:: "noch keine Inbetriebnahme"

In Fig. 2 ist eine perspektivische Sicht auf einen WLAN-Repeater in "Explosionsdarstellung" dargestellt. Es sind der UP-Gerätesockel 2, die Zentralscheibe 9 und ein Abdeckrahmen 23 als Hauptkomponenten des WLAN-Repeaters 1 gezeigt.

In Fig. 3 ist eine perspektivische Sicht auf einen WLAN-Repeater 1 (ohne Abdeckrahmen) im zusammengebauten Zustand dargestellt, d. h. die Zentralscheibe 9 ist auf den UP-Gerätesockel 2 aufgesteckt.

In Fig. 4 ist eine Sicht auf die Frontseite eines WLAN-Repeaters 1 dargestellt, wobei die Zentralscheiben-Abdeckhaube 10 mit den beiden Anzeigefenstern 12, 13 und dem WPS-Button 14 sowie der die Zentralscheiben-Abdeckhaube 10 umschließende Abdeckrahmen 23 zu erkennen sind.

In Fig. 5 ist eine Sicht auf eine geöffnete Zentralscheibe 9 bei entfernter Zentralscheiben-Abdeckhaube 10 dargestellt. Als wesentliche elektrische/elektronische Baukomponenten der am Zentralscheiben-Unterteil 11 montierten Leiterplatte 15 sind der Mikrotaster 16, die beiden mehrfarbigen LEDs 17, 18 und die WLAN-Antenne 19 gezeigt.

In Fig. 6 ist eine Seitenansicht eines WLAN-Repeaters 1 (ohne Abdeckrahmen) im zusammengebauten Zustand dargestellt. Die am Zentralscheiben-Unterteil 11 montierten Rastzungen 21 greifen durch die Rastöffnungen des Tragrings 3 des UP-Gerätesockels 22. Die Zentralscheiben-Abdeckhaube 10 ist über geeignete, nicht näher gezeigte/bezeichnete Rastverbindungen am Zentralscheiben-Unterteil 11 befestigt.

Fig. 7 ist eine perspektivische Sicht auf einen UP-Gerätesockel und eine abgenommene Zentralscheibe dargestellt. Es sind einerseits der UP-Gerätesockel 2 mit Tragring 3 und insgesamt vier Rastöffnungen 4 und andererseits die Zentralscheibe 9 mit in der Zentralscheiben-Abdeckhaube 10 angeordneten Anzeigefenstern 12, 13 und WPS-Button 14 gezeigt.

In Fig. 8 ist eine Seitenansicht auf einen UP-Gerätesockel und eine abgenommene Zentralscheibe dargestellt. Es sind einerseits der UP-Gerätesockel 2 mit Tragring 3 sowie gestrichelt skizzierter elektrischer Steckvorrichtung 8 und andererseits die Zentralscheibe 9 mit Zentralscheiben-Abdeckung 10 und mit am Zentralscheiben-Unterteil 11 befestigten Rastzungen 21 sowie der zur Steckvorrichtung 8 korrespondierend ausgebildeten elektrischen Steckvorrichtung 20 gezeigt.

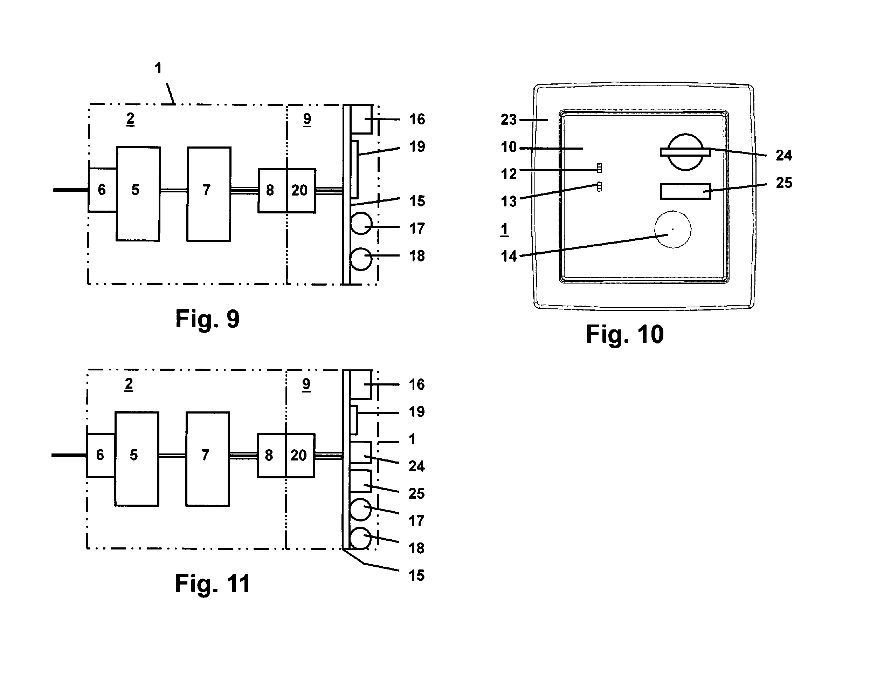

In Fig. 9 ist eine elektrische Schaltskizze des WLAN-Repeaters dargestellt. Der UP-Gerätesockel 2 des WLAN-Repeaters 1 ist über einen Anschluss 6 mit einem 230V-Wechselspannungsnetz verbunden, welches zur Einspeisung eines Netzteils 5 dient, um derart die Spannungsversorgung des WLAN-Repeaters 1 sicherzustellen. Sekundärseitig speist das Netzteil 5 eine im UP-Gerätesockel 2 befindliche WLAN-Repeater-Elektronik 7, welche unter Anderem die für den Funkempfang und die Funkabstrahlung erforderlichen Baukomponenten enthält und ausgangseitig mit der elektrischen Steckvorrichtung 8 verbunden ist. Die Zentralscheibe 9 ist über die korrespondierend zueinander ausgebildeten elektrischen Steckvorrichtungen 8 und 20 lösbar mit dem UP-Gerätesockel 2 verbunden. Als auf der Leiterplatte 15 befindliche Baukomponenten sind der Mikrotaster 16, die beiden mehrfarbigen LEDs 17, 18 und die WLAN-Antenne 19 skizziert.

In Fig. 10 ist eine Sicht auf die Frontseite eines alternativen WLAN-Repeaters dargestellt. Zusätzlich zur Anordnung gemäß Fig. 4 sind in der Zentralscheibe eine SD-Kartenleser-Schnittstelle 24 und eine USB-Schnittstelle 25 integriert.

In Fig. 11 ist eine elektrische Schaltskizze des alternativen WLAN-Repeaters dargestellt. Zusätzlich zur Schaltskizze gemäß Fig. 9 ist die Leiterplatte 15
● mit einer SD-Kartenleser-Schnittstelle 24 für das Einstecken einer SD (Memory) Card (Secure Digital Memory Card) und
● mit einer USB-Schnittstelle 25 (Universal Serial Bus) für den Anschluss eines USB-Massenspeichers / USB-Speichersticks / USB-Sticks oder das Einstecken eines USB-Steckers einer Festplatte bestückt,
d. h. sowohl die SD-Kartenleser-Schnittstelle 24 als auch die USB-Schnittstelle 25 sind von der Zentralscheibe aus zugänglich.

Die mit dem alternativen WLAN-Repeater gemäß den Figuren 10 und 11 erzielbaren zusätzlichen Vorteile bestehen insbesondere darin, dass durch Einstecken einer SD (Memory) Card in die SD-Kartenleser-Schnittstelle 24 oder eines USB-Massenspeichers / USB-Speichersticks / USB-Sticks / USB-Steckers einer Festplatte in die USB-Schnittstelle 25 zusätzliche Daten dem Netzwerk bequem zur Verfügung gestellt werden können, d. h.
● Daten können per SD (Memory) Card oder USB-Schnittstelle (via USB-Stick oder Festplatte) ins Netzwerk eingespeist werden,
● Daten können per SD (Memory) Card oder USB-Schnittstelle (via USB-Stick oder Festplatte) im Netz gesichert werden,
● Daten (Musik, Bilder Filme) können per SD (Memory) Card oder USB-Schnittstelle (via USB-Stick oder Festplatte) dem Netzwerk zur Verfügung gestellt werden.

Mit der an der USB-Schnittstelle 25 zur Verfügung gestellten Spannungsversorgung ist es darüber hinaus möglich, in diese USB-Schnittstelle 25 einen USB-Stecker einer Festplatte (an Stelle eines USB-Massenspeichers / USB-Speichersticks / USB-Sticks) einzustecken und damit den Betrieb der Festplatte zu ermöglichen.

### Bezugszeichenliste

- 1: WLAN-Repeater in Form eines Elektro-Installationsgerätes
- 2: UP-Gerätesockel
- 3: Tragring
- 4: Rastöffnungen
- 5: Netzteil (Spannungsversorgung)
- 6: Anschluss für externes 230V-Wechselspannungsnetz
- 7: WLAN-Repeater-Elektronik
- 8: elektrische Steckvorrichtung
- 9: Zentralscheibe
- 10: Zentralscheiben-Abdeckhaube
- 11: Zentralscheiben-Unterteil
- 12: Anzeigefenster für WLAN-Status-Anzeige
- 13: Anzeigefenster für Inbetriebnahme-Anzeige ("Connectivity")
- 14: WPS-Button (Drucktaste) Wi-Fi-Protected-Setup
- 15: Leiterplatte der Zentralscheibe
- 16: Mikrotaster
- 17: mehrfarbige LED
- 18: mehrfarbige LED
- 19: WLAN-Antenne
- 20: elektrische Steckvorrichtung
- 21: Rastzungen
- 22: -
- 23: Abdeckrahmen
- 24: SD-Kartenleser-Schnittstelle
- 25: USB-Schnittstelle

## Patentansprüche

1. WLAN-Repeater (1) in Form eines Unterputz-Elektro-Installationsgerätes mit UP-Gerätesockel (2), Zentralscheibe (9) und Abdeckrahmen (23),
● wobei eine Zentralscheiben-Abdeckhaube (10) der Zentralscheibe (9) ein Anzeigefenster (12) für eine WLAN-Status-Anzeige, ein Anzeigefenster (13) für eine Inbetriebnahme-Anzeige und einen WPS-Button (14) zur Einleitung eines Wi-Fi-Protected-Setup aufweist,
● wobei eine WLAN-Antenne (19) in der Zentralscheibe (9) angeordnet ist und
● wobei im UP-Gerätesockel (2) ein Netzteil (5) mit einem Anschluss (6) für ein externes 230V-Wechselspannungsnetz und eine WLAN-Repeater-Elektronik (7) vorgesehen sind.

2. WLAN-Repeater (1) nach Anspruch 1, **dadurch gekennzeichnet, dass** die WLAN-Status-Anzeige und/oder die Inbetriebnahme-Anzeige in Form von einer/zwei mehrfarbigen LED(s) (17, 18) ausgebildet ist/sind.

3. WLAN-Repeater (1) nach Anspruch 1, **dadurch gekennzeichnet, dass** der WPS-Button (14) in Form eines Mikrotasters (16) ausgebildet ist.

4. WLAN-Repeater (1) nach den Ansprüchen 1 - 3, **dadurch gekennzeichnet, dass** die WLAN-Antenne (19), die LED(s) (17, 18) und der Mikrotaster (16) auf einer Leiterplatte (15) montiert sind.

5. WLAN-Repeater (1) nach einem der vorstehenden Ansprüche, **dadurch gekennzeichnet, dass** der UP-Gerätesockel (2) und die Zentralscheibe (9) über einander korrespondierend ausgebildete elektrische Steckvorrichtungen (8, 20) lösbar miteinander verbunden sind.

6. WLAN-Repeater (1) nach Anspruch 5, **dadurch gekennzeichnet, dass** der UP-Gerätesockel (2) einen Tragring (3) mit Rastöffnungen (4) aufweist, in welche Rastzungen der Zentralscheibe (9) arretierend eingreifen.

7. WLAN-Repeater (1) nach einem der verstehenden Ansprüche, **dadurch gekennzeichnet, dass** zusätzlich eine SD-Kartenleser-Schnittstelle (24) von der Zentralscheibe (9) aus zugänglich und mit der WLAN-Repeater-Elektronik (7) verbunden ist.

8. WLAN-Repeater (1) nach einem der verstehenden Ansprüche, **dadurch gekennzeichnet, dass** zusätzlich eine USB-Schnittstelle (25) von der Zentralscheibe (9) aus zugänglich und mit der WLAN-Repeater-Elektronik (7) verbunden ist.
